# EUROPÄISCHE PATENTSCHRIFT

(11) **EP 1 483 104 B1**
(45) Veröffentlichungstag und Bekanntmachung des Hinweises auf die Patenterteilung: **03.09.2008**
(21) Anmeldenummer: 03704540.8
(22) Anmeldetag: 05.02.2003
(51) Int. Cl.: B29C 70/64, B29C 45/14, B08B 17/06

(54) **SPRITZGUSSKÖRPER MIT SELBSTREINIGENDEN EIGENSCHAFTEN UND VERFAHREN ZUR HERSTELLUNG SOLCHER SPRITZGUSSKÖRPER**
INJECTION MOLDED BODY HAVING SELF-CLEANING PROPERTIES, AND METHOD FOR PRODUCING INJECTION MOLDED BODIES OF THIS TYPE
CORPS MOULES PAR INJECTION PRESENTANT DES PROPRIETES AUTONETTOYANTES ET PROCEDE DE FABRICATION DE TELS CORPS MOULES PAR INJECTION

(30) Priorität: 12.03.2002 DE 10210673
(43) Veröffentlichungstag der Anmeldung: 08.12.2004
(73) Patentinhaber: Evonik Degussa GmbH, 45128 Essen (DE)
(72) Erfinder: NUN, Edwin, 48727 Billerbeck (DE); DAMBACHER, Gernot, 45657 Recklinghausen (DE); SCHLEICH, Bernhard, 45657 Recklinghausen (DE); OLES, Markus, 45525 Hattingen (DE)
(86) Internationale Anmeldenummer: PCT/EP2003/001114
(87) Internationale Veröffentlichungsnummer: WO 2003/076169

(56) Entgegenhaltungen:
- EP-A- 0 933 388
- EP-A- 1 063 071
- WO-A-96/04123
- FR-A- 2 572 023
- US-A- 5 997 675
- PATENT ABSTRACTS OF JAPAN vol. 015, no. 283 (M-1137), 18. Juli 1991 (1991-07-18) & JP 03 099814 A (MITSUBOSHI BELTING LTD), 25. April 1991 (1991-04-25)

## Beschreibung

Die Erfindung betrifft Spritzgusskörper mit selbstreinigenden Oberflächen und Verfahren zu deren Herstellung.

Aus der Oberflächentechnik sind verschiedene Verfahren zur Behandlung von Oberflächen bekannt, die diese Oberflächen schmutz- und wasserabweisend ausrüsten. So ist z. B. bekannt, dass zum Erzielen einer guten Selbstreinigung einer Oberfläche die Oberfläche neben einer hydrophoben Oberfläche auch eine gewisse Rauhigkeit aufweisen muss. In WO 96/04123 werden Oberflächen von Gegenständen selbstreinigend gemacht, indem man sie künstlich mit einer Oberflächenstruktur aus Erhebungen und Vertiefungen versieht, deren Abstände im Bereich von 5 bis 200 µm, und deren Höhen im Bereich von 5 bis 100 µm liegen. Solche Oberflächenstrukturen werden aus hydrophoben Polymeren, durch nachträgliches Prägen oder Ätzen, oder durch Aufkleben der Teilchen eines Pulvers aus hydrophobem Polymer geschaffen. In WO 96/04123 wird ein Beispiel offenbart, bei dem Teflonpulver mit einer mittleren Teilchengröße von 7 µm auf eine glatte Oberfläche geklebt wird, die zuvor mit UHU PLUS® bestrichen worden ist. In einem anderen Beispiel derselben Anmeldung wird einem Gegenstand eine selbstreinigende Oberflächenstruktur aufgeprägt, indem das glatte, hydrophobe Material des Gegenstandes erhitzt und anschließend ein Highmeshsieb aus dem Offsetdruck auf dessen Oberfläche gedrückt wird. Eine geeignete Kombination aus Struktur und Hydrophobie macht es möglich, dass schon geringe Mengen bewegten Wassers auf der Oberfläche haftende Schmutzpartikel mitnimmt und die Oberfläche reinigen (WO 96/04123; US 3 354 022, C. Neinhuis, W. Barthlott, Annals of Botany 79, (1997), 667).

Das Wassertropfen auf hydrophoben Oberflächen besonders dann, wenn sie strukturiert sind, abrollen, allerdings ohne Selbstreinigung zu erkennen, wurde bereits 1982 von A. A. Abramson in Chimia i Shisn russ. 11, 38, beschrieben.

US 3,861,955 offenbart ein Verfahren, Spritzgusskörper mit schmelzbaren, paramagnetischen Partikeln aus thermoplastischem Material zumindest teilweise zu beschichten, indem auf zumindest eine Oberfläche zumindest eine Lage von Partikeln aufgebracht und durch ein Magnetfeld an dieser Oberfläche gehalten wird. Durch Wärmestrahlung werden Partikel und die Oberfläche der Spritzgießmasse miteinander verschmolzen, so dass anschließend die Partikel in die erstarrte Spritzgießmasse eingebettet sind. Die jeweils nicht eingebetteten Teile der Partikel bilden die Erhebungen auf der so behandelten Oberfläche. Diese Schrift sagt weder etwas über die Mindest- bzw. Höchstdurchmesser der Partikel, über deren Abstände auf der Oberfläche des Spritzgießkörpers oder über das Aspektverhältnis aus, noch wird auf selbstreinigende Eigenschaften der mit diesen Partikeln versehenen Oberfläche hingewiesen.

Stand der Technik bezüglich selbstreinigender Oberflächen ist, gemäß EP 0 933 388, dass für solche selbstreinigenden Oberflächen ein Aspektverhältnis von größer 1 und eine Oberflächenenergie von kleiner 20 mN/m erforderlich ist. Das Aspektverhältnis ist hierbei definiert als der Quotient von mittlerer Höhe zur mittleren Breite der Struktur. Vorgenannte Kriterien sind in der Natur, beispielsweise im Lotusblatt, realisiert. Die aus einem hydrophoben, wachsartigen Material gebildete Oberfläche einer Pflanze weist Erhebungen auf, die bis zu einigen µm voneinander entfernt sind. Wassertropfen kommen im Wesentlichen nur mit den Spitzen der Erhebungen in Berührung. Solche wasserabstoßenden Oberflächen werden in der Literatur vielfach beschrieben. Ein Beispiel dafür ist ein Artikel in Langmuir 2000, 16, 5754, von Masashi Miwa et al, der beschreibt, dass Kontaktwinkel und Abrollwinkel mit zunehmender Strukturierung künstlicher Oberflächen, gebildet aus Böhmit, aufgetragen auf eine spingecoatete Lackschicht und anschließend kalziniert, zunehmen.

Die Schweizer Patentschrift CH-PS 268 258 beschreibt ein Verfahren, bei dem durch Aufbringen von Pulvern, wie Kaolin, Talkum, Ton oder Silicagel, strukturierte Oberflächen erzeugt werden. Die Pulver werden durch Öle und Harze auf Basis von Organosilizium-Verbindungen auf der Oberfläche fixiert.

Der Einsatz von hydrophoben Materialien, wie perfluorierten Polymeren, zur Herstellung von hydrophoben Oberflächen ist bekannt. DE 197 15 906 A1 beschreibt, dass perfluorierte Polymere, wie Polytetrafluorethylen, oder Copolymere aus Polytetrafluorethylen mit Perfluoroalkylvinylethern, hydrophobe Oberflächen erzeugen, die strukturiert sind und ein geringes Anhaftvermögen gegenüber Schnee und Eis aufweisen. In JP 11171592 wird ein wasserabweisendes Produkt und dessen Herstellung beschrieben, wobei die schmutzabweisende Oberfläche dadurch hergestellt wird, dass ein Film auf die zu behandelnde Oberfläche aufgetragen wird, der feine Partikel aus Metalloxid und das Hydrolysat eines Metallalkoxids bzw. eines Metallchelates aufweist. Zur Verfestigung dieses Films muss das Substrat, auf welches der Film aufgebracht wurde, bei Temperaturen von oberhalb 400 °C gesintert werden. Dieses Verfahren ist deshalb nur für Substrate einsetzbar, welche auf Temperaturen von oberhalb 400 °C aufgeheizt werden können.

Die bisher üblichen Verfahren zur Herstellung von selbstreinigenden Oberflächen sind aufwendig und vielfach nur begrenzt einsetzbar. So sind Prägetechniken unflexibel, was das Aufbringen von Strukturen auf verschieden geformte, dreidimensionale Körper betrifft. Zur Erzeugung planer, großflächiger Beschichtungsfolien fehlt heute noch eine geeignete Technologie. Verfahren, bei denen strukturbildende Partikel mittels eines Trägers - wie beispielsweise eines Klebers - auf Oberflächen aufgebracht werden, haben den Nachteil, dass Oberflächen aus den verschiedensten Materialkombinationen erhalten werden, die z. B. bei Wärmebelastung unterschiedliche Ausdehnungskoeffizienten aufweisen, was zu einer Beschädigung der Oberfläche führen kann.

Aufgabe der vorliegenden Erfindung war es deshalb, ein Verfahren zur Herstellung von selbstreinigenden Oberflächen auf dreidimensionalen Formkörpern bereitzustellen. Dabei sollte eine möglichst einfache Technik angewandt und eine Dauerhaftigkeit der selbstreinigenden Oberflächen erzielt werden.

Überraschenderweise wurde gefunden, dass durch Aufbringen von hydrophoben, nanostrukturierten Partikeln auf die innere Werkzeugoberfläche einer Spritzgussform und anschließendes Spritzen eines Spritzgussteiles in dieser Spritzgussform, die Partikel fest auf der Oberfläche des Spritzgusskörpers eingebunden werden können.

Gegenstand der vorliegenden Erfindung sind Spritzgusskörper mit zumindest einer Oberfläche, die selbstreinigende Eigenschaften aufweist, welche dadurch gekennzeichnet sind, dass die Oberfläche zumindest eine fest verankerte Lage von Mikropartikeln, die von erstarrter Spritzgußmasse festgehalten werden, aufweist, welche Erhebungen bilden.

Ebenfalls Gegenstand der vorliegenden Erfindung ist ein Verfahren zur Herstellung von erfindungsgemäßen Spritzgusskörpern mit zumindest einer Oberfläche, die selbstreinigende Eigenschaften und durch Mikropartikel gebildete Erhebungen aufweist, welches dadurch gekennzeichnet ist, dass Mikropartikel vor einem Spritzgussschritt auf die innere Werkzeugoberfläche einer Spritzgussform aufgebracht werden und anschließend ein Spritzguss in dieser Spritzgussform durchgeführt wird, bei welchem die Mikropartikel in die Oberfläche des Spritzgusskörpers eingedrückt werden.

Außerdem sind Gegenstand der vorliegenden Erfindung Gefäße, Gehäuse, Halbzeuge, Abdeckplatten, Fassungen oder Lampenschirme mit einer Oberfläche, die selbstreinigende Eigenschaften und Oberflächenstrukturen mit Erhebungen aufweist, hergestellt nach dem erfindungsgemäßen Verfahren.

Das erfindungsgemäße Verfahren hat den Vorteil, dass es sich bereits vorhandener Gerätschaften für die Herstellung von Spritzgusskörpern bedienen kann. Üblicherweise werden Spritzgussteile mittels Spritzgussformen hergestellt, in die das Material eingespritzt wird. Das erfindungsgemäße Verfahren bedient sich dieses Verfahrens, in dem auf die Spritzgussform vor dem eigentliche Spritzgießen Mikropartikel aufgetragen werden, die beim Spritzgießen auf das Spritzgussteil übertragen werden, in dem die Partikel in die Oberfläche des Spritzgussteils eingedrückt werden. Aus diese einfache Weise sind Spritzgusskörper mit selbstreinigenden Oberflächen zugänglich, die Partikel mit einer zerklüfteten Struktur aufweisen, ohne dass eine zusätzliche Prägeschicht oder Fremdmaterialträgerschicht auf den Spritzgusskörpern aufgebracht werden muss.

Die erfindungsgemäßen Spritzgusskörper haben den Vorteil, dass strukturbildende Partikel nicht von einem Trägermaterial fixiert werden und damit eine unnötig hohe Zahl der Materialkombinationen, und die damit verbundenen negativen Eigenschaften vermieden wird.

Durch das erfindungsgemäße Verfahren sind selbstreinigende Spritzgusskörper zugänglich, bei denen die Selbstreinigung weder durch einen zusätzlichen Materialauftrag für die Partikelfixierung, noch durch einen zusätzlichen chemischen Prozess erreicht wird.

Ein weiterer Vorteil des erfindungsgemäßen Verfahrens liegt darin, dass kratzempfindliche Oberflächen nicht durch nachträgliches mechanisches Aufbringen einer Trägerschicht und/oder von Partikeln geschädigt werden.

Ganz besonders vorteilhaft erweist sich der Umstand, dass beliebige durch Spritzguss herstellbare Flächengrößen selbstreinigend ausgerüstet werden können.

Ein weiterer Vorteil ist die Entformbarkeit von feinstrukturierten Formkörpern. Werkzeuge, die strukturiert sind, können dies nicht immer sicherstellen.

Die Erfindung wird nachfolgend beispielhaft beschrieben, ohne auf diese Ausführungsformen beschränkt zu sein.

Die erfindungsgemäßen Spritzgusskörper mit zumindest einer Oberfläche, die selbst-reinigende Eigenschaften aufweist, zeichnen sich dadurch aus, dass die Oberfläche zumindest eine fest verankerte Lage von Mikropartikel aufweist, welche Erhebungen bilden. Durch die zumindest teilweise vorhandenen Erhebungen auf der Oberfläche der Formkörper in Kombination mit einer Hydrophobie wird sichergestellt, dass diese Oberflächenbereiche nur schwer benetzbar sind und somit selbstreinigende Eigenschaften aufweisen. Die fest verankerte Lage von Mikropartikeln wird dadurch erhalten, dass vor dem Spritzgießen Mikropartikel als Schicht auf das Spritzgusswerkzeug aufgebracht wird und anschließend mit diesem Werkzeug spritzgegossen wird. Beim Spritzguss werden die Mikropartikel in die Spritzgussmasse zumindest teilweise eingedrückt und beim Erstarren der Spritzgussmasse von dieser festgehalten und damit verankert, wobei eine besonders stabile Verankerung erhalten wird, wenn Mikropartikel, die eine Feinstruktur auf der Oberfläche aufweisen, eingesetzt werden, da die Feinstruktur von der Spritzgussmasse teilweise ausgefüllt wird und nach dem Erstarren der Spritzgussmasse viele Verankerungspunkte vorhanden sind. Unter einer Lage von Mikropartikeln wird im Sinne der vorliegenden Erfindung eine Ansammlung von Mikropartikeln an der Oberfläche verstanden, die Erhebungen bilden. Die Lage kann so ausgebildet sein, dass die Oberfläche ausschließlich Mikropartikel, fast ausschließlich Mikropartikel oder aber auch Mikropartikel in einem Abstand von 0 bis 10, insbesondere 0 bis 3 Partikeldurchmessern zueinander aufweist.

Die Oberflächen der Spritzgusskörper mit selbstreinigenden Eigenschaften weisen vorzugsweise mindestens eine Lage mit Erhebungen mit einer mittleren Höhe von 20 nm bis 25 µm und einem mittleren Abstand von 20 nm bis 25 µm, vorzugsweise mit einer mittleren Höhe von 50 nm bis 10 µm und/oder einem mittleren Abstand von 50 nm bis 10 µm und ganz besonders bevorzugt mit einer mittleren Höhe von 50 nm bis 4 µm und/oder einem mittleren Abstand von 50 nm bis 4 µm auf. Ganz besonders bevorzugt weisen die erfindungsgemäßen Spritzgusskörper Oberflächen mit Erhebungen mit einer mittleren Höhe von 0,25 bis 1 µm und einem mittleren Abstand von 0,25 bis 1 µm auf. Unter dem mittleren Abstand der Erhebungen wird im Sinne der vorliegenden Erfindung der Abstand der höchsten Erhebung einer Erhebung zur nächsten höchsten Erhebung verstanden. Hat eine Erhebung die Form eines Kegels so stellt die Spitze des Kegels die höchste Erhebung der Erhebung dar. Handelt es sich bei der Erhebung um einen Quader, so stellte die oberste Fläche des Quaders die höchste Erhebung der Erhebung dar.

Die Benetzung von Körpern und damit die selbstreinigende Eigenschaft lässt sich durch den Randwinkel, den ein Wassertropfen mit der Oberfläche bildet, beschreiben. Ein Randwinkel von 0 Grad bedeutet dabei eine vollständige Benetzung der Oberfläche. Die Messung des statischen Randwinkels erfolgt in der Regel mittels Geräten, bei denen der Randwinkel optisch bestimmt wird. Auf glatten hydrophoben Oberflächen werden üblicherweise statische Randwinkel von kleiner 125 ° gemessen. Die vorliegenden Spritzgusskörper mit selbstreinigenden Oberflächen weisen statische Randwinkel von vorzugsweise größer 130 ° auf, bevorzugt größer 140 ° und ganz besonders bevorzugt größer 145 ° auf. Es wurde außerdem gefunden, dass eine Oberfläche nur dann gute selbstreinigende Eigenschaften aufweist, wenn diese eine Differenz zwischen Fortschreit- und Rückzugswinkel von maximal 10 ° aufweist, weshalb erfindungsgemäße Oberflächen vorzugsweise eine Differenz zwischen Fortschreit-und Rückzugswinkel von kleiner 10 °, vorzugsweise kleiner 5 ° und ganz besonders bevorzugt kleiner 4 ° aufweisen. Für die Bestimmung des Fortschreitwinkels wird ein Wassertropfen mittels einer Kanüle auf die Oberfläche gesetzt und durch Zugabe von Wasser durch die Kanüle der Tropfen auf der Oberfläche vergrößert. Während der Vergrößerung gleitet der Rand des Tropfens über die Oberfläche und der Kontaktwinkel wird Fortschreitwinkel bestimmt. Der Rückzugswinkel wird an dem selben Tropfen gemessen, nur wird durch die Kanüle dem Tropfen Wasser entzogen und während des Verkleinerns des Tropfens der Kontaktwinkel gemessen. Der Unterschied zwischen beiden Winkeln wird als Hysterese bezeichnet. Je kleiner der Unterschied ist, desto geringer ist die Wechselwirkung des Wassertropfens mit der Oberfläche der Unterlage und desto besser ist der Lotuseffekt.

Die erfindungsgemäßen Oberflächen mit selbstreinigenden Eigenschaften weisen bevorzugt ein Aspektverhältnis der Erhebungen von größer 0,15 auf. Vorzugsweise weisen die Erhebungen, die durch die Partikel selbst gebildet werden, ein Aspektverhältnis von 0,3 bis 0,9 auf, besonders bevorzugt von 0,5 bis 0,8 auf. Das Aspektverhältnis ist dabei definiert als der Quotient von maximaler Höhe zur maximalen Breite der Struktur der Erhebungen.

Die erfindungsgemäßen Spritzgusskörper mit Oberflächen, die selbstreinigende Eigenschaften und Oberflächenstrukturen mit Erhebungen aufweisen, zeichnen sich dadurch aus, dass die Oberflächen vorzugsweise Kunststoffoberflächen sind, in die Partikel direkt eingebunden bzw. verankert und nicht über Trägersysteme oder ähnliches angebunden sind.

Die Partikel werden an die Oberfläche angebunden bzw. verankert in dem die Partikel beim Spritzgießen in das Material des Spritzgusskörpers eingedrückt werden. Um die genannten Aspektverhältnisse zu erzielen ist es vorteilhaft, wenn zumindest ein Teil der Partikel, vorzugsweise mehr als 50 % der Partikel, vorzugsweise nur bis zu 90 % ihres Durchmessers in die Oberfläche des Spritzgusskörpers eingedrückt werden. Die Oberfläche weist deshalb bevorzugt Partikel auf, die mit 10 bis 90 %, bevorzugt 20 bis 50 % und ganz besonders bevorzugt von 30 bis 40 % ihres mittleren Partikeldurchmessers in der Oberfläche verankert sind und damit mit Teilen ihrer inhärent zerklüfteten Oberfläche noch aus den Spritzgussteilen herausragen. Auf diese Weise ist gewährleistet, dass die Erhebungen, die durch die Partikel selbst gebildet werden, ein genügend großes Aspektverhältnis von vorzugsweise zumindest 0,15 aufweisen. Auf diese Weise wird außerdem erreicht, dass die fest verbundenen Partikel sehr haltbar mit der Oberfläche des Formkörpers verbunden sind. Das Aspektverhältnis ist hierbei definiert als das Verhältnis von maximaler Höhe zu maximaler Breite der Erhebungen. Ein als ideal kugelförmiger angenommener Partikel, der zu 70 % aus der Oberfläche des Spritzgusskörpers herausragt weist gemäß dieser Definition ein Aspektverhältnis von 0,7 auf. Es sei explizit daraufhingewiesen, dass die erfindungsgemäßen Partikel keine kugelige Form aufweisen müssen.

Die mit der Oberfläche fest verbundenen Mikropartikel, die die Erhebungen auf der Oberfläche der Spritzgusskörper bilden, sind vorzugsweise ausgewählt aus Silikaten, Mineralien, Metalloxiden, Metallpulvem, Kieselsäuren, Pigmenten oder Polymeren, ganz besonders bevorzugt aus pyrogenen Kieselsäuren, Fällungskieselsäuren, Aluminiumoxid, Mischoxiden, dotierten Silikaten, Titandioxiden oder pulverförmige Polymeren.

Bevorzugt Mikropartikel weisen einen Partikeldurchmesser von 0,02 bis 100 µm, besonders bevorzugt von 0,1 bis 50 µm und ganz besonders bevorzugt von 0,1 bis 30 µm auf. Geeignete Mikropartikel können aber auch einen Durchmessern von kleiner als 500 nm aufweisen oder sich aus Primärteilchen zu Agglomeraten oder Aggregaten mit einer Größe von 0,2 bis 100 µm zusammenlagern.

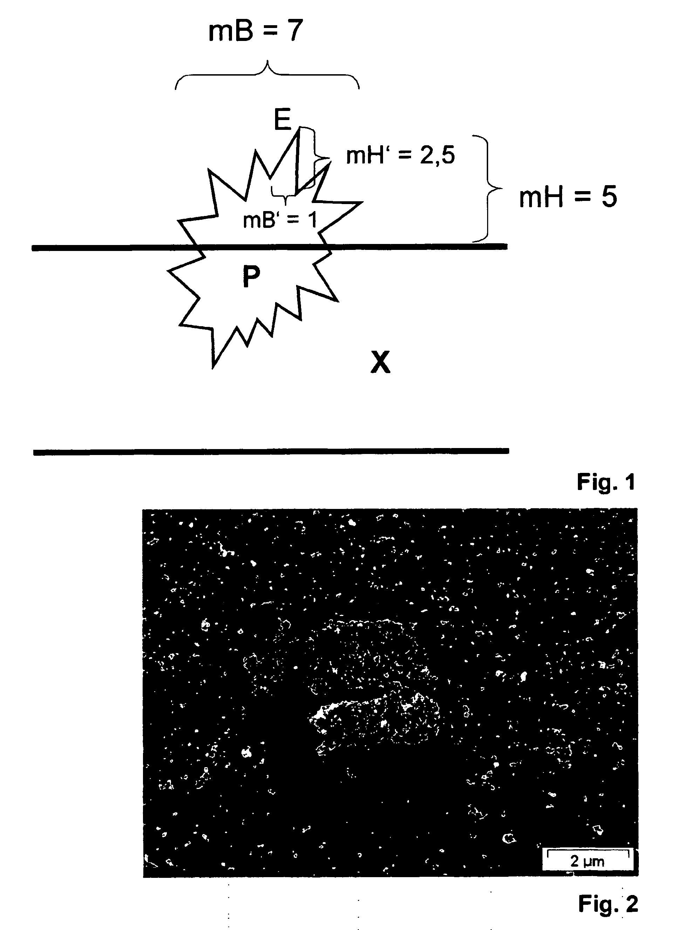

Besonders bevorzugte Mikropartikel, welche die Erhebungen der strukturierten Oberfläche bilden, sind solche, die eine unregelmäßige, luftig-zerklüftete Feinstruktur im Nanometerbereich auf der Oberfläche aufweisen. Dabei weisen die Mikropartikel mit der unregelmäßigen, luftig-zerklüfteten Feinstruktur vorzugsweise Erhebungen mit einem Aspektverhältnis in den Feinstrukturen von größer 1, besonders bevorzugt größer 1,5 auf. Das Aspektverhältnis ist wiederum definiert als Quotient aus maximaler Höhe zu maximaler Breite der Erhebung. In Fig. 1 wird der Unterschied der Erhebungen, die durch die Partikel gebildet werden und die Erhebungen, die durch die Feinstruktur gebildet werden schematisch verdeutlicht. Die Figur zeigt die Oberfläche eines Spritzgusskörpers X, die Partikel P aufweist (Zur Vereinfachung der Darstellung ist nur ein Partikel abgebildet). Die Erhebung, die durch den Partikel selbst gebildet wird, weist ein Aspektverhältnis von ca. 0,71 auf, berechnet als Quotient aus der maximalen Höhe des Partikels mH, die 5 beträgt, da nur der Teil des Partikels einen Beitrag zur Erhebung leistet, der aus der Oberfläche des Spritzgusskörpers X herausragt, und der maximalen Breite mB, die im Verhältnis dazu 7 beträgt. Eine ausgewählte Erhebung der Erhebungen E, die durch die Feinstruktur der Partikel auf den Partikeln vorhanden sind, weist ein Aspektverhältnis von 2,5 auf, berechnet als Quotient aus der maximalen Höhe der Erhebung mH', die 2,5 beträgt und der maximalen Breite mB', die im Verhältnis dazu 1 beträgt.

Bevorzugte Mikropartikel, die eine unregelmäßige Feinstruktur im Nanometerbereich an der Oberfläche aufweisen, sind solche Partikel, die zumindest eine Verbindung, ausgewählt aus pyrogener Kieselsäure, Fällungskieselsäuren, Aluminiumoxid, Mischoxiden, dotierten Silikaten, Titandioxiden oder pulverförmige Polymeren aufweisen.

Es kann vorteilhaft sein, wenn die Mikropartikel hydrophobe Eigenschaften aufweisen, wobei die hydrophoben Eigenschaften auf die Materialeigenschaften der an den Oberflächen der Partikel vorhandenen Materialien selbst zurückgehen können oder aber durch eine Behandlung der Partikel mit einer geeigneten Verbindung erhalten werden kann. Die Mikropartikel können vor oder nach dem Aufbringen bzw. Anbinden auf bzw. an die Oberfläche des Spritzgusskörpers mit hydrophoben Eigenschaften ausgestattet worden sein.

Zur Hydrophobierung der Partikel vor oder nach dem Aufbringen auf die Oberfläche können diese mit einer zur Hydrophobierung geeigneten Verbindung, z. B. aus der Gruppe der Alkylsilane, der Fluoralkylsilane oder der Disilazane behandelt werden.

Im Folgenden werden besonders bevorzugte Mikropartikel näher erläutert. Die Partikel können aus unterschiedlichen Bereichen kommen. Beispielsweise können es Silikate sein, dotierte Silikate, Mineralien, Metalloxide, Aluminiumoxid, Kieselsäuren oder Titandioxide, Aerosile^{®} oder pulverförmige Polymere, wie z. B. sprühgetrocknete und agglomerierte Emulsionen oder cryogemahlenes PTFE. Als Partikelsysteme eignen sich im Besonderen hydrophobierte pyrogene Kieselsäuren, sogenannte Aerosile^{®}. Zur Generierung der selbstreinigenden Oberflächen ist neben der Struktur auch eine Hydrophobie nötig. Die eingesetzten Partikel können selbst hydrophob sein, wie beispielsweise pulverförmiges Polytetrafluorethylen (PTFE). Die Partikel können hydrophob ausgerüstet sein, wie beispielsweise das Aerosil VPR 411^{®} oder Aerosil R 8200^{®}. Sie können aber auch nachträglich hydrophobiert werden. Hierbei ist es unwesentlich, ob die Partikel vor dem Auftragen oder nach dem Auftragen hydrophobiert werden. Solche zu hydrophobierenden Partikel sind beispielsweise Aeroperl 90/30^{®}, Sipemat Kieselsäure 350^{®}, Aluminiumoxid C^{®}, Zirkonsilikat, vanadiumdotiert oder Aeroperl P 25/20^{®}. Bei letzteren erfolgt die Hydrophobierung zweckmäßig durch Behandlung mit Perfluoralkylsilanverbindungen und anschließender Temperung.

Die Spritzgusskörper können die Erhebungen auf allen Oberflächen oder nur auf bestimmten Oberflächen oder auf Teilbereichen dieser aufweisen. Vorzugsweise weisen die erfindungsgemäßen Spritzgusskörper die Erhebungen auf allen Oberflächen auf.

Die Spritzgusskörper selbst können als Material vorzugsweise Polymere auf der Basis von Polycarbonaten, Polyoxymethylenen, Poly(meth)acrylaten, Polyamiden, Polyvinylchlorid (PVC), Polyethylenen, Polypropylenen, Polystyrolen, Polyestern, Polyethersulfonen, aliphatischen linearen- oder verzweigten Polyalkenen, cyclischen Polyalkenen, Polyacrylnitril oder Polyalkylenterephthalaten, sowie deren Gemische oder Copolymere, auf. Besonders bevorzugt weisen die Spritzgusskörper als Material ein Material, ausgewählt aus Poly(vinylidenfluorid), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(ethylen), Poly(propylen), Poly(isobuten), Poly(4-methyl-1-penten) oder Polynorbonen als Homo- oder Copolymer aufweisen. Ganz besonders bevorzugt weisen die Spritzgusskörper als Material für die Oberfläche Poly(ethylen), Poly(propylen). Polymethylmethacrylaten, Polystyrolen, Polyestern, Acrylnitril-Butadien-Styrol Terpolymere (ABS) oder Poly(vinylidenfluorid) auf.

Die erfindungsgemäßen Spritzgusskörper werden vorzugsweise gemäß dem erfindungsgemäßen Verfahren zur Herstellung von Spritzgusskörpern mit zumindest einer Oberfläche die selbstreinigende Eigenschaften und durch Mikropartikel gebildete Erhebungen aufweist, welches dadurch gekennzeichnet ist, dass Mikropartikel vor einem Spritzgussschritt auf die innere Oberfläche der Spritzgussform aufgebracht werden und anschließend ein Spritzgussschritt durchgeführt wird, bei welchem die Mikropartikel in die Oberfläche des Spritzgusskörpers eingedrückt werden. Die Spritzgussform ist vorzugsweise eine Form, die für die Herstellung von herkömmlichen Spritzgusskörpern üblicherweise verwendet wird. Solche üblichen Spritzgussformen können z. B. aus zwei Teilen bestehen, dem Gesenk und dem Kern. Gemäß dem erfindungsgemäßen Verfahren können die Mikropartikel auf das Gesenk (Matrize) und/oder auf den Kern (Patrize) aufgebracht werden.

Das Eindrücken erfolgt vorzugsweise so, dass zumindest ein Teil der Partikel, vorzugsweise zumindest 50 % der Partikel nur zu maximal 90 % ihres Durchmessers, vorzugsweise mit 10 bis 70 %, bevorzugt mit 20 bis 50 % und ganz besonders bevorzugt mit 30 bis 40 % ihres mittleren Partikeldurchmessers in die Oberfläche des Spritzgusskörpers eingedrückt werden.

Als Material für das erfindungsgemäße Verfahren können alle zum Spritzgießen von Spritzgusskörpern geeigneten Polymere eingesetzt werden. Bevorzugt werden als Materialien für das Spritzgießen Polymere eingesetzt, die ein Polymer auf der Basis von Polycarbonaten, Polyoxymethylenen, Poly(meth)acrylaten, Polyamiden, Polyvinylchlorid, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten, Poly(vinylidenfluorid), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(isobuten), ABS, Poly(4-methyl-1-penten), Polynorbonen als Homo- oder Copolymer oder deren Gemische, aufweisen.

Die Mikropartikel, die in dem erfindungsgemäßen Verfahren in die Oberfläche des Spritzgusskörpers eingedrückt werden, werden vor dem Teilschritt des Eindrückens durch Spritzgießen auf die Oberfläche der Spritzgussform aufgebracht. Das Aufbringen erfolgt vorzugsweise durch Besprühen. Das Aufbringen der Mikropartikel auf die Spritzgussform ist insbesondere deshalb vorteilhaft, weil das Mikropulver verhindert, dass nach Beendigung des Spritzgussvorganges das Material des Spritzgusskörpers an der Form anhaftet, da das Material selbst kaum bzw. gar nicht mit der Form in Kontakt kommt, da die Mikropartikel zur Erzielung der bevorzugten Abstände der Erhebungen sehr dicht auf die Form aufgebracht werden.

Das Aufsprühen der Mikropartikel auf die Form kann z. B. durch Aufsprühen von Mikropartikelpulvern aufweisenden Aerosolen oder Dispersionen, die neben den Mikropartikeln ein Treibmittel oder ein, vorzugsweise leicht flüchtiges Lösemittel aufweisen, erfolgen, wobei das Aufsprühen von Suspensionen bevorzugt ist. Als Lösemittel weisen die eingesetzten Suspensionen vorzugsweise einen Alkohol, insbesondere Ethanol oder IsoPropanol, Ketone, wie z. B. Aceton oder Methylethylketon, Ether, wie z. B. Diisopropylether, oder auch Kohlenwasserstoffe wie Cyclohexan auf. Ganz besonders bevorzugt weisen die Suspensionen Alkohole auf. Es kann vorteilhaft sein, wenn die Suspension von 0,1 bis 10, bevorzugt von 0,25 bis 7,5 und ganz besonders bevorzugt von 0,5 bis 5 Gew.-% Mikropartikel bezogen auf das Gesamtgewicht der Suspension aufweist. Insbesondere bei dem Aufsprühen einer Dispersion kann es vorteilhaft sein, wenn das Spritzgusswerkzeug eine Werkzeugoberflächentemperatur von 30 bis 150 °C aufweist. Je nach herzustellendem Spritzgusskörper bzw. dem dafür verwendetem Material kann die Temperatur der Form aber auch unabhängig vom Mikropartikelpulver bzw. dem Aufbringen des Mikropartikelpulvers eine Temperatur im genannten Bereich aufweisen.

Der Druck, mit dem das Material in die Spritzgussform gespritzt wird beträgt vorzugsweise größer 40 bar, ist aber, ebenso wie andere beim Spritzgießen zu beachtenden Parameter, wie z. B. die Temperatur, von der Art des zum Spritzgießen verwendeten Polymeren, der Ausführungsform des Spritzgusswerkzeuges (z. B. als Heißkanalwerkzeug) sowie von der verwendeten Geometrie des Spritzgussteiles abhängig. Das Ermitteln der Spritzgussparameter gehört zum Wissen eines Fachmanns und wird hier nicht näher erläutert. Informationen zum Spritzgießen sind beispielsweise in Hans Batzer, Polymere Werkstoffe, Georg Thieme Verlag Stuttgart - New York, 1984 oder in Kunststoff Handbuch 1, Die Kunststoffe; Chemie, Physik, Technologie, Bodo Carlowitz (Herausgeber), Hanser Verlag München, 1990 nachzulesen.

Als Mikropartikel werden in dem erfindungsgemäßen Verfahren vorzugsweise solche eingesetzt, die zumindest ein Material, ausgewählt aus Silikaten, Mineralien, Metalloxiden, Metallpulvem, Kieselsäuren, Pigmenten oder Polymeren aufweisen. Vorzugsweise werden Mikropartikel eingesetzt, die einen Partikeldurchmesser von 0,02 bis 100 µm, besonders bevorzugt von 0,1 bis 50 µm und ganz besonders bevorzugt von 0,1 bis 30 µm aufweisen. Es können auch Mikropartikel mit Durchmessern von kleiner als 500 nm eingesetzt werden. Geeignet sind aber auch Mikropartikel, die sich aus Primärteilchen zu Agglomeraten oder Aggregaten mit einer Größe von 0,2 bis 100 µm zusammenlagern.

Bevorzugt werden als Mikropartikel, insbesondere als Partikel, die eine unregelmäßige Feinstruktur im Nanometerbereich an der Oberfläche aufweisen, solche Partikel eingesetzt, die zumindest eine Verbindung, ausgewählt aus pyrogener Kieselsäure, Fällungskieselsäuren, Aluminiumoxid, Mischoxiden, dotierten Silikaten, Titandioxiden oder pulverförmige Polymeren aufweisen. Bevorzugte Partikel, die eine unregelmäßige Feinstruktur im Nanometerbereich an der Oberfläche aufweisen, weisen in dieser Feinstruktur Erhebungen auf, die ein Aspektverhältnis von größer 1, besonders bevorzugt größer 1,5 und ganz besonders bevorzugt größer 2,5 aufweisen. Das Aspektverhältnis ist wiederum definiert als Quotient aus maximaler Höhe zu maximaler Breite der Erhebung.

Vorzugsweise weisen die Mikropartikel hydrophobe Eigenschaften auf, wobei die hydrophoben Eigenschaften auf die Materialeigenschaften der an den Oberflächen der Partikel vorhandenen Materialien selbst zurückgehen können oder aber durch eine Behandlung der Partikel mit einer geeigneten Verbindung erhalten werden kann. Die Partikel können vor oder nach dem Eindrücken in die Oberfläche mit hydrophoben Eigenschaften ausgestattet werden.

Zur Hydrophobierung der Mikropartikel vor oder nach dem Eindrücken (Verankern) in die Oberfläche des Spritzgusskörpers können diese mit einer zur Hydrophobierung geeigneten Verbindung z. B. aus der Gruppe der Alkylsilane, der Fluoralkylsilane oder der Disilazane, wie sie beispielweise unter dem Namen Dynasylan von der Degussa AG angeboten werden, behandelt werden.

Im Folgenden werden die bevorzugt eingesetzten Mikropartikel näher erläutert. Die eingesetzten Partikel können aus unterschiedlichen Bereichen kommen. Beispielsweise können es Titandioxide sein, dotierte Silikate, Mineralien, Metalloxide, Aluminiumoxid, Kieselsäuren oder pyrogene Silikate, Aerosile^{®} oder pulverförmige Polymere, wie z. B. sprühgetrocknete und agglomerierte Emulsionen oder cryogemahlenes PTFE. Als Partikelsysteme eignen sich im Besonderen hydrophobierte pyrogene Kieselsäuren, sogenannte Aerosile. Zur Generierung der selbstreinigenden Oberflächen ist neben der Struktur auch eine Hydrophobie nötig. Die eingesetzten Partikel können selbst hydrophob sein, wie beispielsweise das PTFE. Die Partikel können hydrophob ausgerüstet sein, wie beispielsweise das Aerosil VPR 411^{®} oder Aerosil R 8200^{®}. Sie können aber auch nachträglich hydrophobiert werden. Hierbei ist es unwesentlich, ob die Partikel vor dem Auftragen oder nach dem Auftragen hydrophobiert werden. Solche zu hydrophobierenden Partikel sind beispielsweise Aeroperl 90/30^{®}, Sipernat Kieselsäure 350^{®}, Aluminiumoxid C^{®}, Zirkonsilikat, vanadiumdotiert oder Aeroperl P 25/20^{®}. Bei letzteren erfolgt die Hydrophobierung zweckmäßig durch Behandlung mit Perfluoralkylsilanverbindungen und anschließender Temperung.

Mittels des erfindungsgemäßen Verfahrens sind die erfindungsgemäßen Spritzgusskörper zugänglich. Die Formkörper können jedwede Form aufweisen, die mit den bekannten Spritzgussverfahren hergestellt werden können. Solche Formkörper können insbesondere Gefäße zur Aufnahme von Flüssigkeiten oder Pasten sein. Insbesondere können die erfindungsgemäßen Spritzgusskörper ausgewählt sein aus Gefäßen, Lampenschirmen, Eimern, Vorratsgefäßen, Fässern, Schalen, Messbechern, Trichtern, Wannen und Gehäuseteilen.

Das erfindungsgemäße Verfahren wird an Hand der Figuren Fig. 1 und 2 beschrieben, ohne dass die Erfindung darauf beschränkt sein soll. Die Figur Fig. 1 zeigt schematisch die Oberfläche eines Spritzgusskörpers **X,** die Partikel **P** aufweist (Zur Vereinfachung der Darstellung ist nur ein Partikel abgebildet.). Die Erhebung, die durch den Partikel selbst gebildet wird, weist ein Aspektverhältnis von ca. 0,71 auf, berechnet als Quotient aus der maximalen Höhe des Partikels **mH,** die 5 beträgt, da nur der Teil des Partikels einen Beitrag zur Erhebung leistet, der aus der Oberfläche des Spritzgusskörpers **X** herausragt, und der maximalen Breite **mB,** die im Verhältnis dazu 7 beträgt. Eine ausgewählte Erhebung der Erhebungen **E,** die durch die Feinstruktur der Partikel auf den Partikeln vorhanden sind, weist ein Aspektverhältnis von 2,5 auf, berechnet als Quotient aus der maximalen Höhe der Erhebung **mH',** die 2,5 beträgt und der maximalen Breite **mB',** die im Verhältnis dazu 1 beträgt.

In Fig. 2 ist eine rasterelektronenmikroskopische (REM) Aufnahme eines mit hydrophober Kieselsäure Aerosil 8200 beschichteten Spritzgusskörpers, hergestellte gemäß Beispiel 1 abgebildet. Es ist gut zu erkennen, dass die Kieselsäurepartikel in der Oberfläche verankert sind. In Bildmitte sind zwei große Kieselsäurepartikelaggregate zu erkennen. Auf der Oberfläche sind aber auch weitere Partikel mit Partikelgrößen von ca. 200 nm zu erkennen.

Das erfindungsgemäße Verfahren wird an Hand der nachfolgenden Beispiele beschrieben, ohne dass die Erfindung auf dieses Ausführungsbeispiel beschränkt sein soll.

### Beispiel 1:

Auf eine Spritzgussform wird eine Suspension von Aerosil R8200^{®} (1 Gew.-%ig in Ethanol) aufgebracht und das Lösemittel (Ethanol) anschließend verdampfen gelassen. Mit der so vorbereiteten Spritzgussform wurde bei einer Werkzeugoberflächentemperatur von 60 °C und einem Druck von 55 bar mit einer Standardspritzgussmaschine (Engel 150/50 S) Rundplättchen von 6 cm Durchmesser und 2 mm Dicke aus schlagzähmodifiziertem PVC (Vinnolit S3268 mit einem K-Wert von 68, schlagzäh ausgerüstet mit ca. 6 % Bärodur EST 4) spritzgegossen. Die Schmelzetemperatur betrug 195 °C und der Nachpressdruck lag bei 50 bar. Der aus der Spritzgussform erhaltene Spritzgusskörper wies in die Oberfläche eingedrückte Partikel auf. An der so hergestellten Oberfläche des Spritzgusskörpers wurde der Abrollwinkel für einen Wassertropfen dadurch bestimmt, dass ein Tropfen auf die Oberfläche aufgebracht wurde und durch immer stärkeres Schrägstellen des Spritzgusskörpers der Winkel bestimmt wurde, bei welchem der Tropfen von der Oberfläche abrollt. Es ergab sich für einen 40 µl großen Wassertropfen ein Abrollwinkel von 8,6 ° und ein Randwinkel von ca. 150 °.

### Beispiel 2:

Gemäß Beispiel 1 wurden Rundplättchen von weiteren Kunststoffen mittels Spritzguss hergestellt, wobei die in der nachfolgenden Tabelle 1 angegebenen Kunststoffe sowie die dort angegebenen Parameter verwendet wurden. Im Unterschied zu Beispiel 1 wurden Rundplättchen mit einem Durchmesser von 60 mm und einer Dicke von 4 mm hergestellt. Vor jedem Spritzgussschritt wurde auf die Spritzgussform jeweils eine Suspension von Aerosil R8200^{®} 1 Gew.-%ig in Ethanol aufgebracht und das Lösemittel anschließend verdampfen lassen.

**Tabelle 1**

| Produkt | Kunststoff | Langname | Masse (C°) | Form (C°) | Spritzdruck (bar) | Nachdruck (bar) | Nachdruck (sec.) | Kühlzeit (sec.) | Spritz zeit (sec.) |
|---|---|---|---|---|---|---|---|---|---|
| VESTAMID L1600 | PA 12 | Polyamid | 200 | 50 | 90 | 30 | 10 | 20 | 6,2 |
| VESTAMID D16 | PA 12 | Polyamid | 250 | 60 | 90 | 30 | 16 | 20 | 5,06 |
| VESTODU R 1000 | PBT | Polybutylenterephthalat | 260 | 60 | 90 | 20 | 16 | 15 | 2,81 |
| TROGAMID T5000 | PA 6-3T | Polyamid, transparent | 280 | 80 | 90 | 35 | 16 | 16 | 3,61 |
| VESTORAN 1900 | PPE | Polyphenylenether | 300 | 80 | 90 | 35 | 16 | 15 | 3,36 |
| DYFLOR LE | PVDF | Polyvinylidenfluorid | 270 | 80 | 90 | 35 | 16 | 15 | 2,76 |

Für die so hergestellten Rundplättchen wurden wiederum die Abrollwinkel für einen 40 µl Wassertropfen gemäß Beispiel 1 bestimmt. Zusätzlich wurden Fortschreit- und Rückzugswinkel optisch gemessen. Für die Bestimmung des Fortschreitwinkels wird ein Wassertropfen mittels einer Kanüle auf die Oberfläche gesetzt und durch Zugabe von Wasser durch die Kanüle der Tropfen auf der Oberfläche vergrößert. Während der Vergrößerung gleitet der Rand des Tropfens über die Oberfläche und der Kontaktwinkel wird als Fortschreitwinkel bestimmt. Der Rückzugswinkel wird an dem selben Tropfen gemessen, nur wird durch die Kanüle dem Tropfen Wasser entzogen und während des Verkleinerns des Tropfens der Kontaktwinkel gemessen. Der Unterschied zwischen beiden Winkeln wird als Hysterese bezeichnet. Je kleiner der Unterschied ist, desto geringer ist die Wechselwirkung des Wassertropfens mit der Oberfläche der Unterlage und desto besser ist der Lotuseffekt. Unsere Erfahrungen zeigen, dass Oberflächen nur dann gute selbstreinigende Eigenschaften aufweisen, wenn diese eine Differenz zwischen Fortschreit- und Rückzugswinkel von maximal 10 ° aufweisen. Die Ergebnisse sind in Tabelle 2 wiedergegeben. Zum Vergleich sind in der Tabelle 2 außerdem die Abrollwinkel von Wassertropfen von 40 µl für Rundplättchen angegeben, die durch Spritzgießen wie oben angegeben ohne die Verwendung von Mikropartikeln erhalten wurden.

**Tabelle 2**

| **Produkt** | **Kunststoff** | **Langname** | **Abrollwinkel (°) 40µl Tropfen** | **Fortschreltwinkel (°)** | **Rückzugswinkel (°)** | **Abrollwinkel eines unstrukturierten Rundplättchens (°)** |
|---|---|---|---|---|---|---|
| VESTAMID L1600 | PA 12 | Polyamid | 0,7 | 156,1 | 154,9 | 31,7 |
| VESTAMID D16 | PA 12 | Polyamid | 1,4 | 155,1 | 152,9 | 49,0 |
| VESTODUR 1000 | PBT | Polybutylenterephthalat | 1,6 | 151,6 | 147,0 | 31,8 |
| TROGAMID T5000 | PA 6-3T | Polyamid, transparent | 3,0 | 154,3 | 152,9 | 38,1 |
| VESTORAN 1900 | PPE | Polyphenylenether | 3,0 | 156,8 | 154,7 | 29,1 |
| DYFLOR LE | PVDF | Polyvinylidenfluorid | 2,4 | 156,5 | 154,0 | 19,6 |

Wie an Hand der Ergebnisse aus Tabelle 2 eindeutig zu erkennen ist, lassen sich durch Aufbringen von Mikropartikeln auf eine Spritzgussform und anschließendes Spritzgießen mit dieser Form Formkörper herstellen, die Oberflächen mit selbstreinigenden Eigenschaften aufweisen, dass heißt Oberflächen, von denen Schmutzpartikel mittels bewegten Wassers einfach entfernt werden können.

## Patentansprüche

1. Spritzgusskörper mit zumindest einer Oberfläche, die selbstreinigende Eigenschaften aufweist,
**dadurch gekennzeichnet,**
**dass** die Oberfläche zumindest eine fest verankerte Lage von Mikropartikeln, die von erstarrter Spritzgußmasse festgehalten werden, aufweist, welche Erhebungen bilden.

2. Spritzgusskörper nach Anspruch 1,
**dadurch gekennzeichnet,**
**dass** die Erhebungen eine mittlere Höhe von 20 nm bis 25 µm und einen mittleren Abstand von 20 nm bis 25 µm aufweisen.

3. Spritzgusskörper nach Anspruch 1 oder 2,
**dadurch gekennzeichnet,**
**dass** die Erhebungen eine mittlere Höhe von 50 nm bis 4 µm und/oder einen mittleren Abstand von 50 nm bis 4 µm aufweisen.

4. Spritzgusskörper nach einem der Ansprüche 1 bis 3,
**dadurch gekennzeichnet,**
**dass** die Erhebungen, die durch die Partikel selbst gebildet werden, ein Aspektverhältnis von 0,3 bis 0,9 aufweisen.

5. Spritzgusskörper nach einem der Ansprüche 1 bis 4,
**dadurch gekennzeichnet,**
**dass** die Mikropartikel nanostrukturierte Mikropartikel sind, die eine Feinstruktur mit Erhebungen mit einem Aspektverhältnis von größer 1 aufweisen.

6. Spritzgusskörper nach einem der Ansprüche 1 bis 5,
**dadurch gekennzeichnet,**
**dass** die Mikropartikel, ausgewählt sind aus Partikeln von Silikaten, Mineralien, Metalloxiden, Metallpulvern, Kieselsäuren, Pigmenten und/oder Polymeren.

7. Spritzgusskörper nach einem der Ansprüche 1 bis 6,
**dadurch gekennzeichnet,**
**dass** die Mikropartikel ausgewählt sind aus Partikeln von pyrogenen Kieselsäuren, Fällungskieselsäuren, Aluminiumoxid, Mischoxiden, dotierten Silikaten, Titandioxid oder pulverförmige Polymeren.

8. Spritzgusskörper nach einem der Ansprüche 1 bis 7,
**dadurch gekennzeichnet,**
**dass** die Mikropartikel hydrophobe Eigenschaften aufweisen.

9. Spritzgusskörper nach einem der Ansprüche 1 bis 8,
**dadurch gekennzeichnet,**
**dass** der Spritzgusskörper selbst ein Material, ausgewählt aus Polycarbonaten, Polyoxymethylenen, Poly(meth)acrylaten, Polyamiden, Polyvinylchlorid, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten, Poly(vinylidenfluorid), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(isobuten), Poly(4-methyl-1-penten), Polynorbornen als Homo- oder Copolymer sowie deren Gemische, aufweist.

10. Spritzgusskörper nach einem der Ansprüche 1 bis 9,
**dadurch gekennzeichnet,**
**dass** die eingedrückten Partikel mit 10 bis 90 % ihres mittleren Partikeldurchmessers in der Oberfläche verankert sind.

11. Spritzgusskörper nach einem der Ansprüche 1 bis 10,
**dadurch gekennzeichnet,**
**dass** die Mikropartikel eine mittlere Partikelgröße von 0,02 bis 100 µm aufweisen.

12. Verfahren zur Herstellung von Spritzgusskörpern gemäß einem der Ansprüche 1 bis 11 mit zumindest einer Oberfläche, die selbstreinigende Eigenschaften und durch Mikropartikel gebildete Erhebungen aufweist, durch Spritzgießen,
**dadurch gekennzeichnet,**
**dass** Mikropartikel vor einem Spritzgussschritt auf die Spritzgussform aufgebracht werden und anschließend ein Spritzgussschritt durchgeführt wird, bei welchem die Mikropartikel in die Oberfläche des Spritzgusskörpers eingedrückt werden.

13. Verfahren gemäß Anspruch 12,
**dadurch gekennzeichnet,**
**dass** zumindest ein Teil der eingedrückten Partikel nur zu maximal 90 % ihres Durchmessers in das Spritzgusskörper eingedrückt werden.

14. Verfahren gemäß Anspruch 12 oder 13,
**dadurch gekennzeichnet,**
**dass** ein Polymer auf der Basis von Polycarbonaten, Polyoxymethylenen, Poly(meth)acrylaten, Polyamiden, Polyvinylchlorid, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten, Poly(vinylidenfluorid), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(isobuten), Poly(4-methyl-1-penten), Acrylnitril-Butadien-Styrol-Terpolymer (ABS), Polynorbonen als Homo- oder Copolymer sowie deren Gemische zum Spritzgießen eingesetzt wird.

15. Verfahren nach zumindest einem der Ansprüche 12 bis 14,
**dadurch gekennzeichnet,**
**dass** die Spritzgussform eine für die Herstellung von herkömmlichen Spritzgusskörpern notwendige Form ist.

16. Verfahren nach einem der Ansprüche 12 bis 15,
**dadurch gekennzeichnet,**
**dass** die Mikropartikel durch Aufsprühen auf die Spritzgussform aufgebracht werden.

17. Verfahren nach Anspruch 16,
**dadurch gekennzeichnet,**
**dass** die Mikropartikel durch Aufbringen einer Suspension, die hydrophobe Partikel und ein Lösemittel aufweist, auf die Spritzgussform und anschließendes Verdampfen des Lösemittels auf die Spritzgussform aufgebracht wird.

18. Verfahren nach Anspruch 16,
**dadurch gekennzeichnet,**
**dass** die Mikropartikel durch Aufbringen eines Aerosols, das hydrophobe Partikel und ein Treibgas aufweist, auf die Spritzgussform aufgebracht wird.

19. Verfahren nach mindestens einem der Ansprüche 12 bis 18,
**dadurch gekennzeichnet,**
**dass** das Spritzgießen mit einem Druck von größer 40 bar durchgeführt wird.

20. Verfahren nach mindestens einem der Ansprüche 12 bis 19,
**dadurch gekennzeichnet,**
**dass** die eingesetzten Mikropartikel einen mittleren Partikeldurchmesser von 0,02 bis 100 µm aufweisen.

21. Verfahren nach mindestens einem der Ansprüche 12 bis 20,
**dadurch gekennzeichnet,**
**dass** Mikropartikel, ausgewählt aus Silikaten, Mineralien, Metalloxiden, Metallpulvern, Kieselsäuren, Pigmenten oder Polymeren, eingesetzt werden

22. Verfahren nach mindestens einem der Ansprüche 12 bis 21,
**dadurch gekennzeichnet,**
**dass** die eingesetzten Mikropartikel hydrophobe Eigenschaften aufweisen.

23. Verfahren nach mindestens einem der Ansprüche 12 bis 22,
**dadurch gekennzeichnet,**
**dass** die Mikropartikel durch eine Behandlung mit einer geeigneten Verbindung hydrophobe Eigenschaften aufweisen.

24. Verfahren gemäß Anspruch 23,
**dadurch gekennzeichnet,**
**dass** die Mikropartikel vor oder nach dem Verbinden mit der Oberfläche des Spritzgusskörpers mit hydrophoben Eigenschaften ausgestattet werden.

25. Spritzgusskörper gemäß einem der Ansprüche 1 bis 11, hergestellt nach einem Verfahren gemäß einem der Ansprüche 12 bis 24.

26. Spritzgusskörper gemäß Anspruch 25, ausgewählt aus Gefäßen, Lampenschirmen, Eimern, Vorratsgefäßen, Fässern, Schalen, Messbechern, Trichtern, Wannen und Gehäuseteilen.

## Claims

1. Injection molding with at least one surface which has self-cleaning properties,
**characterized in that**
the surface has at least one securely anchored layer of microparticles which are firmly held by solidified injection-molding melt and form elevations.

2. Injection molding according to Claim 1,
**characterized in that**
the elevations have an average height of from 20 nm to 25 µm and an average separation of from 20 nm to 25 µm.

3. Injection molding according to Claim 1 or 2,
**characterized in that**
the elevations have an average height of from 50 nm to 4 µm and/or an average separation of from 50 nm to 4 µm.

4. Injection molding according to any of Claims 1 to 3,
**characterized in that**
the actual elevations formed by the particles have an aspect ratio of from 0.3 to 0.9.

5. Injection molding according to any of Claims 1 to 4,
**characterized in that**
the microparticles are nanostructured microparticles which have a fine structure with elevations with an aspect ratio greater than 1.

6. Injection molding according to any of Claims to 5,
**characterized in that**
the microparticles have been selected from the group consisting of particles of silicates, minerals, metal oxides, metal powders, silicas, pigments, and polymers.

7. Injection molding according to any of Claims 1 to 6,
**characterized in that**
the microparticles have been selected from the group consisting of particles of fumed silicas, precipitated silicas, aluminum oxide, mixed oxides, doped silicates, titanium dioxide, and pulverulent polymers.

8. Injection molding according to any of Claims 1 to 7,
**characterized in that**
the microparticles have hydrophobic properties.

9. Injection molding according to any of Claims 1 to 8,
**characterized in that**
the injection molding itself comprises a material selected from the group consisting of polycarbonates, polyoxymethylenes, poly(meth)-acrylates, polyamides, polyvinyl chloride, polyethylenes, polypropylenes, aliphatic linear or branched polyalkenes, cyclic polyalkenes, polystyrenes, polyesters, polyether sulfones, polyacrylonitrile, polyalkylene terephthalates, poly(vinylidene fluoride), poly(hexafluoropropylene), poly(perfluoropropylene oxide), poly(fluoroalkyl acrylate), poly(fluoroalkyl methacrylate), poly(vinyl perfluoroalkyl ether), or comprises other polymers made from perfluoroalkoxy compounds, poly(isobutene), poly(4-methyl-1-pentene), polynorbornene in the form of homo- or copolymer, or else a mixture of these.

10. Injection molding according to any of Claims 1 to 9,
**characterized in that**
the impressed particles have been anchored with from 10 to 90% of their average particle diameter in the surface.

11. Injection molding according to any of Claims 1 to 10,
**characterized in that**
the microparticles have an average particle size of from 0.02 to 100 µm.

12. Process for producing injection moldings according to any of Claims 1 to 11 with at least one surface which has self-cleaning properties and has elevations formed by microparticles, by injection molding,
**characterized in that**
microparticles are applied to the injection mold prior to an injection-molding step and then an injection-molding step is carried out in which the microparticles are pressed into the surface of the injection molding.

13. Process according to Claim 12,
**characterized in that**
at least some of the impressed particles are impressed into the injection molding only to the extent of not more than 90% of their diameter.

14. Process according to Claim 12 or 13,
**characterized in that**
use is made, for the injection-molding process, of a polymer based on polycarbonates, on polyoxymethylenes, on poly(meth)acrylates, on polyamides, on polyvinyl chloride, on polyethylenes, on polypropylenes, on aliphatic linear or branched polyalkenes, on cyclic polyalkenes, on polystyrenes, on polyesters, on polyether sulfones, on polyacrylonitrile, on polyalkylene terephthalates, on poly(vinylidene fluoride), on poly(hexafluoropropylene), on poly(perfluoropropylene oxide), on poly(fluoroalkyl acrylate), on poly(fluoroalkyl methacrylate), on poly(vinyl perfluoroalkyl ether), or of other polymers made from perfluoroalkoxy compounds, poly(isobutene), poly(4-methyl-1-pentene), acrylonitrile-butadienestyrene terpolymer (ABS), polynorbornene in the form of homo- or copolymer, or else a mixture of these.

15. Process according to any least one of Claims 12 to 14,
**characterized in that**
the injection mold is a mold needed for the production of conventional injection moldings.

16. Process according to any of Claims 12 to 15,
**characterized in that**
the microparticles are applied to the injection mold by spray-application.

17. Process according to Claim 16,
**characterized in that**
the microparticles are applied to the injection mold by applying, to the injection mold, a suspension which comprises hydrophobic particles and comprises a solvent, and then evaporating the solvent.

18. Process according to Claim 16,
**characterized in that**
the microparticles are applied to the injection mold by applying an aerosol which comprises hydrophobic particles and a propellant gas.

19. Process according to at least one of Claims 12 to 18,
**characterized in that**
the injection-molding process is carried out using a pressure greater than 40 bar.

20. Process according to at least one of Claims 12 to 19,
**characterized in that**
the microparticles used have an average particle diameter of from 0.2 to 100 µm.

21. Process according to at least one of Claims 12 to 20,
**characterized in that**
use is made of microparticles selected from the group consisting of silicates, minerals, metal oxides, metal powders, silicas, pigments, and polymers.

22. Process according to at least one of Claims 12 to 21,
**characterized in that**
the microparticles used have hydrophobic properties.

23. Process according to at least one of Claims 12 to 22,
**characterized in that**
the microparticles have hydrophobic properties by virtue of treatment with a suitable compound.

24. Process according to Claim 23,
**characterized in that**
the microparticles have been provided with hydrophobic properties prior to or after bonding to the surface of the injection molding.

25. Injection molding according to any of Claims 1 to 11, produced by a process according to any of Claims 12 to 24.

26. Injection molding according to Claim 25, selected from the group consisting of vessels, lampshades, bins, storage vessels, drums, dishes, measuring beakers, funnels, tanks, and housing parts.

## Revendications

1. Corps moulé par injection, comportant au moins une surface qui présente des propriétés autonettoyantes, **caractérisé en ce que** la surface comporte au moins une couche solidement ancrée de microparticules, fixées par la masse moulée par injection, solidifiée, qui forment des saillies.

2. Corps moulé par injection, selon la revendication 1, **caractérisé en ce que** les saillies ont une hauteur moyenne de 20 nm à 25 µm et un écart moyen de 20 nm à 25 µm.

3. Corps moulé par injection, selon la revendication 1 ou 2, **caractérisé en ce que** les saillies ont une hauteur moyenne de 50 nm à 4 µm et/ou un écart moyen de 50 nm à 4 µm.

4. Corps moulé par injection, selon l'une quelconque des revendications 1 à 3, **caractérisé en ce que** les saillies, qui sont formées par les particules elles-mêmes, ont un rapport de forme de 0,3 à 0,9.

5. Corps moulé par injection, selon l'une quelconque des revendications 1 à 4, **caractérisé en ce que** les microparticules sont des microparticules nanostructurées qui présentent une structure fine comportant des saillies avec un rapport de forme supérieur à 1.

6. Corps moulé par injection, selon l'une quelconque des revendications 1 à 5, **caractérisé en ce que** les microparticules sont choisies parmi des particules de silicates, de minéraux, d'oxydes métalliques, de poudres métalliques, d'acides siliciques, de pigments et/ou de polymères.

7. Corps moulé par injection, selon l'une quelconque des revendications 1 à 6, **caractérisé en ce que** les microparticules sont choisies parmi des particules d'acides siliciques pyrogénés, d'acides siliciques précipités, d'oxyde d'aluminium, d'oxydes mixtes, de silicates dopés, de dioxyde de titane ou de polymères pulvérulents.

8. Corps moulé par injection, selon l'une quelconque des revendications 1 à 7, **caractérisé en ce que** les microparticules ont des propriétés hydrophobes.

9. Corps moulé par injection, selon l'une quelconque des revendications 1 à 8, **caractérisé en ce que** le corps moulé par injection comporte lui-même un matériau choisi parmi les polycarbonates, les polyoxyméthylènes, les poly(méth)acrylates, les polyamides, le poly(chlorure de vinyle), les polyéthylènes, les polypropylènes, les polyalcènes aliphatiques linéaires ou ramifiés, les polyalcènes cycliques, les polystyrènes, les polyesters, les polyéthersulfones, le polyacrylonitrile ou les poly(alkylènetéréphtalate)s, le poly(fluorure de vinylidène), le poly(hexafluoropropylène), le poly(perfluorooxypropylène), un poly(acrylate de fluoroalkyle), un poly(méthacrylate de fluoroalkyle), un poly(vinylperfluoroalkyléther) ou d'autres polymères à base de composés perfluoroalcoxy, le poly(isobutène), le poly(4-méthyl-1-pentène), les polynorbornènes sous forme d'homopolymère ou de copolymère ainsi que des mélanges de ceux-ci.

10. Corps moulé par injection, selon l'une quelconque des revendications 1 à 9, **caractérisé en ce que** les particules insérées par pression sont ancrées dans la surface par 10 à 90 % de leur diamètre moyen de particule.

11. Corps moulé par injection, selon l'une quelconque des revendications 1 à 10, **caractérisé en ce que** les microparticules ont une taille moyenne de particule de 0,02 à 100 µm.

12. Procédé pour la production de corps moulés par injection selon l'une quelconque des revendications 1 à 11, comportant au moins une surface qui présente des propriétés autonettoyantes et comporte des saillies formées par des microparticules, par moulage par injection, **caractérisé en ce que** les microparticules sont appliquées, avant une étape de moulage par injection, sur le moule à injection et on effectue ensuite une étape de moulage par injection, dans laquelle les microparticules sont insérées par pression dans la surface du corps moulé par injection.

13. Procédé selon la revendication 12, **caractérisé en ce qu'**au moins une partie des particules insérées par pression ne sont insérées par pression qu'à raison d'au maximum 90 % de leur diamètre dans le corps moulé par injection.

14. Procédé selon la revendication 12 ou 13, **caractérisé en ce qu'**on utilise pour le moulage par injection un polymère à base de polycarbonates, polyoxyméthylènes, poly(méth)-acrylates, polyamides, poly(chlorure de vinyle), polyéthylènes, polypropylènes, polyalcènes aliphatiques linéaires ou ramifiés, polyalcènes cycliques, polystyrènes, polyesters, polyéthersulfones, polyacrylonitrile ou poly(alkylènetéréphtalate)s, poly(fluorure de vinylidène), poly(hexafluoropropylène), poly(perfluoro-oxypropylène), poly(acrylate de fluoroalkyle), poly(méthacrylate de fluoroalkyle), poly(vinylperfluoroalkyléther) ou d'autres polymères à base de composés perfluoroalcoxy, le poly(isobutène), le poly(4-méthyl-1-pentène), un terpolymère acrylonitrile-butadiène-styrène (ABS), les polynorbornènes, sous forme d'homopolymère ou de copolymère ainsi que des mélanges de ceux-ci.

15. Procédé selon au moins l'une des revendications 12 à 14, **caractérisé en ce que** le moule de moulage par injection est un moule requis pour la production de corps moulés par injection traditionnels.

16. Procédé selon l'une quelconque des revendications 12 à 15, **caractérisé en ce que** les microparticules sont appliquées par pulvérisation sur le moule à injection.

17. Procédé selon la revendication 16, **caractérisé en ce qu'**on applique sur le moule à injection les microparticules par application d'une suspension qui comporte des particules hydrophobes et un solvant, et évaporation subséquente du solvant.

18. Procédé selon la revendication 16, **caractérisé en ce que** la microparticule est appliquée sur le moule à injection par application d'un aérosol qui comporte des particules et un gaz propulseur.

19. Procédé selon au moins l'une des revendications 12 à 18, **caractérisé en ce que** le moulage par injection est effectué sous une pression de plus de 40 bars.

20. Procédé selon au moins l'une des revendications 12 à 19, **caractérisé en ce que** les particules utilisées ont un diamètre moyen de particule de 0,02 à 100 µm.

21. Procédé selon au moins l'une des revendications 12 à 20, **caractérisé en ce qu'**on utilise des microparticules choisies parmi des silicates, des minéraux, des oxydes métalliques, des poudres métalliques, des acides siliciques, des pigments ou des polymères.

22. Procédé selon au moins l'une des revendications 12 à 21, **caractérisé en ce que** les microparticules utilisées ont des propriétés hydrophobes.

23. Procédé selon au moins l'une des revendications 12 à 22, **caractérisé en ce que** les microparticules présentent des propriétés hydrophobes grâce à un traitement par un composé approprié.

24. Procédé selon la revendication 23, **caractérisé en ce que** les microparticules sont dotées de propriétés hydrophobes avant ou après la liaison avec la surface du corps moulé par injection.

25. Corps moulé par injection selon l'une quelconque des revendications 1 à 11, produit conformément à un procédé selon l'une quelconque des revendications 12 à 24.

26. Corps moulé par injection selon la revendication 25, choisi parmi des récipients, des abat-jour, des seaux, des réservoirs, des fûts, des coques, des gobelets gradués, des entonnoirs, des cuves et des pièces de boîtiers.
